# EUROPEAN PATENT APPLICATION

(11) **EP 2 961 182 A1**
(43) Date of publication of application: **30.12.2015**
(21) Application number: 14306019.2
(22) Date of filing: 27.06.2014
(51) Int. Cl.: H04N 21/4728, H04N 21/218

(54) **Method, system and device for navigating in ultra high resolution video content by a client device**

(71) Applicant: Alcatel Lucent, 92100 Boulogne-Billancourt (FR)
(72) Inventor: Rondão Alface, Patrice, 2018 Antwerpen (BE); Macq, Jean-François, 2018 Antwerpen (BE); Verzijp, Nico, 2018 Antwerpen (BE)
(74) Representative: ALU Antw Patent Attorneys

(57) **Abstract**

The present invention relates to a method, system and related devices for selecting a spatial portion of ultra high resolution video content, under control of a client device, for being transmitted from a server towards said client device where said method comprises first obtaining selection information from said client device to select a spatial portion of said ultra high resolution video content for transmitting towards said client device and selecting said spatial portion from said ultra high resolution video content based on said selection information in view of at least part of said ultra high resolution video content being transmitted from said server towards said client device in combination with/function of content data pertaining to said ultra high resolution video content.

## Description

### FIELD OF THE INVENTION

The present invention relates to the field of selecting a spatial portion of ultra high resolution video content by a client device.

### TECHNICAL BACKGROUND OF THE INVENTION

In current interactive high resolution video consumption applications where the user is able to navigate in video content using Pan-Tilt-Zoom (PTZ) commands at e.g. a mobile device (such as Zoomable Videos, FascinatE project etc), users are able to define by a few interactions the position and zoom level of their preferred field-of-view at a certain time t. This means, that for panoramic content, the user may select a portion of the high resolution content and only watch this selected portion, but alternatively he may also move this field of view so as to follow or track a spatial portion of the high resolution video content, such as a portion containing the user's favourite soccer player or containing the ball.

Moreover, such high spatial-resolution video, also referred to as Ultra High Resolution video, is becoming more and more common. This type of content ranges from High Definition, hereafter abbreviated with HD, video with 1920x1080 pixels per frame to higher resolution video either directly acquired with advanced optics and image sensors or obtained from stitched views from multiple cameras.

In such interactive high resolution video applications, it has been observed that interactions for selecting a certain portion of the high resolution video content, although very much appreciated, are not easy to perform. For instance, in case of moving content, such as a ball in a soccer game, while it is easy to zoom in static portions of the content such as some part of the field or some part of the tribunes, where the user intends to track a given player or the ball, this user perceives the interactions for selecting the meant portion of the high resolution video content to be tedious and cumbersome after some time, due to the interaction delay or the sensitivity of the interactions with respect to the speed and trajectory of the desired (fast) moving object or person.

### SUMMARY OF THE INVENTION

An objective of embodiments of the present invention is to provide with a method, a system and related devices for selecting a spatial portion of ultra high resolution video content by a client device of the known type, but wherein the aforementioned shortcoming or drawbacks of the known solutions are alleviated or overcome.

According to an aspect of the invention, there is provided a method for selecting a spatial portion of ultra high resolution video content, under control of a client device, for being transmitted from a server towards said client device, said method comprising the steps of obtaining selection information from said client device to select a spatial portion of said ultra high resolution video content for transmitting towards said client device and selecting said spatial portion from said ultra high resolution video content, based on said selection information in view of at least part of said ultra high resolution video content being transmitted from said server towards said client device in combination with content data pertaining to said ultra high resolution video content.

Accordingly, embodiments of the present invention relate to a system configured to, under control of a client device, select a spatial portion of ultra high resolution video content for being transmitted from a server towards a client device, said client device being coupled to said server, said system comprising:
- a reception means configured to obtain selection information from said client device to select a spatial portion of said ultra high resolution video content for transmitting said spatial portion towards said client device; and
- a selection means, configured to select said spatial portion from said ultra high resolution video content, based on said selection information in view of at least part of said ultra high resolution video content being transmitted from said server towards said client device in combination with video content data pertaining to said ultra high resolution video content.

Still further embodiments of the present invention relate to a device, said device being configured to select a spatial portion of ultra high resolution video content under control of a client device, at least part of said ultra high resolution video content being transmitted from a server towards said client device, said device comprising:
- a selection information reception means, configured to obtain selection information, from said client device (CD), to select a spatial portion of said ultra high resolution video content for transmitting towards said client device (CD); and
- a video content reception means, configured to obtain said ultra high resolution video content; and
- a content data reception means, configured to obtain said video content data pertaining to said ultra high resolution video content; and
- a selection means, configured to select said spatial portion from said ultra high resolution video content, based on said selection information in view of at least part of said ultra high resolution video content being transmitted from said server towards said client device in combination with video content data pertaining to said ultra high resolution video content.

The present invention further relates to a Server for use in a system according to claim 4, wherein said server comprises a device according to claim 6.

Finally, the present invention relates to a Network element for use in a system according to claim 4, wherein said server comprises a device according to claim 6.

In this way, optionally by means of a server, obtaining spatial portion selection information from a client device to select a spatial portion of an ultra high resolution video content transmitted towards said client device and by the server selecting a spatial portion of said ultra high resolution video content for transmitting said spatial portion of said ultra high resolution video content towards the client device, where the selecting is based on the obtained spatial portion selection information in view of the at least part of said ultra high resolution video content currently being transmitted from said server towards said client device where the video content data pertaining to the ultra high resolution video content better enables to guide the selection of the spatial portion into a direction whereof the spatial portion better match the navigation goals of a user of the client device.

Due to the fact that the video content data pertaining to the ultra high resolution video content may include region of interest data indicating regions that may be of special interest to a user of such client device, and/or saliency data that provides a user of the client device with additional information on the video content such user may be interested in, so that the server better is enabled to select a spatial portion of the ultra high resolution video content that with a higher probability better matches the navigation goal of the user of the client device.

It is an advantage that the selection information originating from the client device is considered by the server while taking into account additional information, i.e. the video content data pertaining to the ultra high resolution video, for making a better estimation of the spatial selection of the ultra high resolution video the respective user is interested in.

Still further embodiments of the present invention relate to a method and system wherein said selection information contains a Pan-Tilt- Zoom command.

In another embodiment, the method according to the present invention the selection information contains a Pan-Tilt- Zoom command. The selection information may include Pan-Tilt-Zoom (PTZ) commands originating from a client device.

The selection information in view of the at least part of said ultra high resolution video content, being transmitted from said server towards said client device entails that the selection information, i.e. the PTZ command, is related to the current transmitted and presented video content and that the navigation/selection action corresponding to the PTZ command is performed on the video content currently being transmitted and played out.

A further embodiment relates to method and system wherein said selection information contains a command based on content's reference coordinates.

The selection information in view of the at least part of said ultra high resolution video content, being transmitted from said server towards said client device entails that the selection information comprises reference 2D coordinates possibly with the index of the camera the pixel relates to, which enables to solve situations of overlap or of disconnected portions of the generalized panorama wherein each reference coordinates identifies a pixel of the full ultra high resolution video content, e.g. of the generalized panorama.

Still another embodiment relates to a method and system wherein said content data contains at least one of region of interest information and saliency information that is coupled to dedicated portions of the ultra high resolution content.

In a further embodiment, the method of the present invention does the content data contain at least one of region of interest information and saliency information that is coupled to dedicated portions of the ultra high resolution content.

The video content data pertaining to the ultra high resolution video content may include region of interest data indicating regions that may be of special interest to a user of such client device, and/or saliency data that provides a user of the client device with additional information on the video content such user may be interested in, so that the server better is enabled to select a spatial portion of the ultra high resolution video content that with a higher probability better matches the navigation goal of the user of the client device.

It is important to assist the user in reducing the numbers of necessary commands for achieving his/her navigation goal while still offering free-interactivity. Observing that because of video transmission and user commands transport delay, as well as the relative accuracy of the user interactions, it is suitable to filter such interactions in such a way that the user obtains the navigation goal he or she was looking for. It is proposed to use content data such as saliency, ROI prediction/detection (and production scripts if available) in order to reasonably guess the navigation objectives of the user and assist the navigation by slightly correcting the trajectory taken by the user and/or recommending several probable navigation objectives when such objectives are close to each other and that none of these can be easily prioritized/selected with respect to the others.

It is to be noted that the described functional means of the system may be distributed over the first communications device and/or one or more further network elements such as a server device as described in the further appended claims.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents the functional structure of a system comprising a user device UD0 and a server device SD according to an embodiment of the present invention.
Fig. 2 represents a functional representation of device SD according to an embodiment of the present invention; and

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

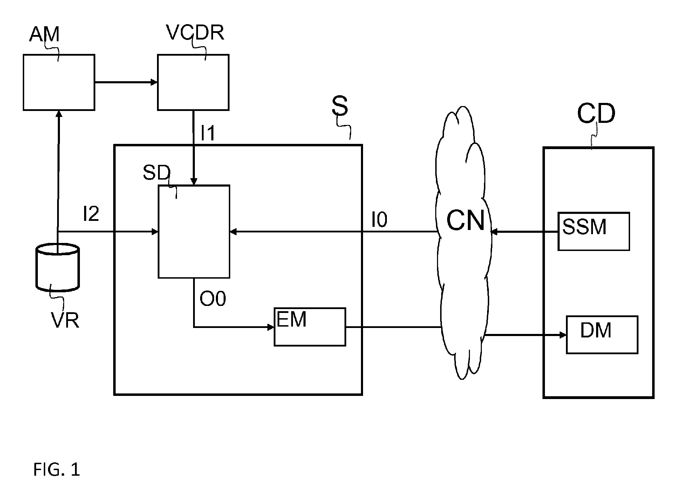

In the following paragraphs, referring to the drawing in FIG.1, an implementation of the system for selecting a spatial portion of ultra high resolution video content under control of a client device according to an embodiment of the present invention is described. In a further paragraph, all connections between mentioned elements are defined. Subsequently all relevant functional means of the mentioned system as presented in FIG.1 are described followed by a description of all interconnections.

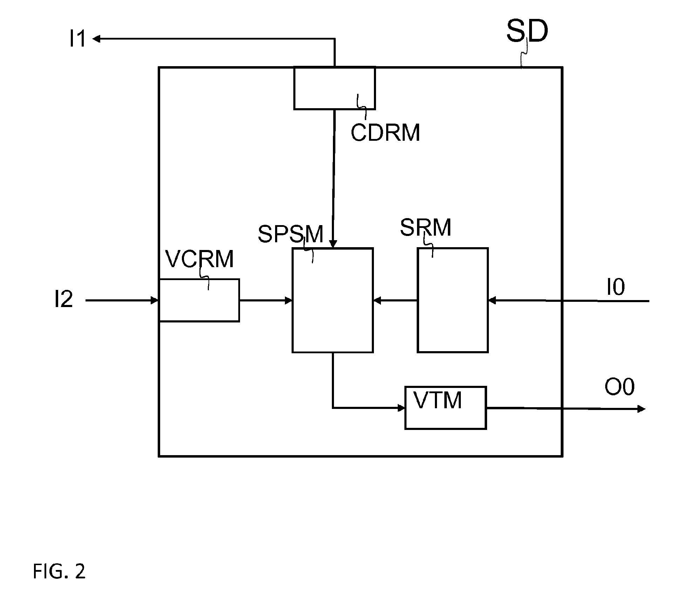

In subsequent paragraphs, referring to the drawing in FIG.2, an implementation of a device SD being configured to select a spatial portion of ultra high resolution video content under control of a client device according to an embodiment of the present invention is described. Subsequently all relevant functional means of the mentioned system as presented in FIG.1 are described followed by a description of all interconnections.

In the succeeding paragraph the actual execution of the system is described.

A first essential element of the system is a server S that is configured to transmit ultra high resolution video content from a video repository included in - or coupled to the server S towards a client device CD.

The transmitting of ultra high resolution video content by the server S may be streaming or more generally be applied by means of any video transporting protocol of this video content towards at least one client device CD of a plurality of client devices.

The server S may be an element of a content cluster or service node in a multimedia content delivery network (see http://en.wikipedia.org/wiki/Content delivery network).

The server S may be a server in a content delivery network or alternatively be a virtualization of the server functionality in a cloud environment, or be a process distributed over several devices, or a GPU farm etc.

It is to be noted that, the system although this is not shown or further described may comprise a plurality of client devices.

The client device CD in turn is configured to receive the ultra high resolution video content transmitted by the server S.

The client device CD may be an IP connected computer terminal being equipped with a screen and a set of speakers for rendering a multimedia asset streamed by the server S towards the client device CD or an IPTV connected television set coupled via a set-top box to the internet, where this device again is equipped with a screen with a set of speakers for rendering a multimedia asset streamed, or alternatively may be a connected television, tablet PC, other PC such as a fixed PC or laptop PC, smart phone or a TV connected to a Kinect sensor and/or to a gamepad or joystick, or a gaming console etc.

The server S and client device CD may be coupled over a suitable communication network CN optionally containing a concatenation of an access network such as a digital subscriber line access network with coupled DSL modems or a cable network, a mobile communication access network with connected Smartphone or tablet devices or other suitable communications network and core internet network etc.

In this embodiment the video content data repository VCDR is coupled to the server S over any kind of suitable high speed connection (typically wired, with optical fibre or an Ethernet connection, but the information of the VCDR could also be cached on a high speed access drive such as an SSD connected to the server for example).

In this embodiment the video content repository VR is coupled to the server S over any kind of high speed reliable connection (due to the high resolution content, such connection would preferably be optical fibre technology). The content of the VR could also be cached on high speed access SSD drives on the server.

In case the VR contains raw video data, the bandwidth needs are today between 3 to 20 Gbps.

In case the content is stored in a perceptually lossless compressed format, the required bandwidth could then vary between 0.5 to 5 Gbps).

The Analysis Means AM is coupled to the video content repository VR over any kind of suitable high speed reliable connection and coupled to the video content data repository VCDR over a high speed reliable connection.

It is to be noted that although such system usually comprises a plurality of such client devices for reasons of simplicity only client device CD is disclosed.

A first essential means of the server S is the selection device SD that is configured to select a spatial portion from said ultra high resolution video content, based on said selection information in view of at least part of said ultra high resolution video content being transmitted, optionally from said server S, towards said client device CD in combination with content data pertaining to said ultra high resolution video content and an encoding means EM that is configured to encode the selected spatial portion of the ultra high resolution video content in a format that is suitable for the client device CD for playing out of the selected spatial portion.

The server S further may include a video content data repository VCDR that is adapted to maintain the content data pertaining to the ultra high resolution video which content may include region of interest data indicating regions that may be of special interest to a user of such client device, and/or saliency data that provides a user of the client device with additional information on the video content, such user may be interested in. The video content data repository VCDR alternatively may be accommodated in another network element and be coupled to the server S.

The server S may include a video content repository VR that is adapted to maintain a plurality of an ultra high resolution video content asset for transmittal to a client device CD. The video content repository VR alternatively may be accommodated in another network element and be coupled to the server S.

The Analysis means AM is configured to analyze ultra high resolution video content assets for generating the content data based on the ultra high resolution video content where this content data may include region of interest data and/ or saliency data by means of video analysis with known Computer Vision tools for ROI detection and tracking as well as saliency and feature detection tools.

Alternatively, several regions of interest, referred to as ROI, can also be determined by the production side director or given by the shared current navigation positions on the same content of the user's buddies within a social network.

The selection device SD, that is optionally included in the server S, comprises a video content reception means VCRM that is configured to obtain said ultra high resolution video content and a content data reception means CDRM that is configured to obtain said content data content data pertaining to said ultra high resolution video content. The selection device SD additionally includes a selection means SPSM that is configured to select said spatial portion from said ultra high resolution video content, based on said selection information in view of at least part of said ultra high resolution video content being transmitted (from said server S) towards said client device CD in combination with content data pertaining to said ultra high resolution video content.

Further, the selection device SD comprises a video transmission means that is configured to transmit the spatial portion of the ultra high resolution video content towards an Encoding means EM of the server S.

Finally the selection device may comprise a selection information reception means SRM that is configured to obtain selection information, from said client device CD, to select a spatial portion of said ultra high resolution video content for transmitting towards said client device CD.

It is to be noted that the selection device SD, alternatively may be a separate network element or may be included in another network element such as a proxy device that is close to the client device users in order to minimize the delay of the user selection information transmission (this proxy device can be e.g. a set top box).

The video content reception means VCRM of the selection device SD is coupled with an output to an input of the selection means SPSM and further has an input-terminal that is at the same time an input-terminal 12 of the selection device SD. The content data reception means CDRM of the device SD further is coupled with an output to an input of the selection means SPSM and further has an input-terminal that is at the same time an input-terminal I1 of the selection device SD. The selection information reception means SRM additionally is coupled with an output to an input of the selection means SPSM and further has an input-terminal that is at the same time an input-terminal 10 of the selection device SD. The selection means SPSM is coupled with an output to an input of the video selection transmission means VTM that in turn is has an output-terminal that is at the same time an output-terminal O0 of the selection device SD.

The client device CD comprises a spatial portion selection means SSM that is configured to make a selection of a spatial portion of said ultra high resolution video content for transmitting towards the client device.

The selection is made by using Pan-Tilt-Zoom (PTZ) commands at the client device under control of the user of such client device that is enabled to make selection of the ultra high resolution video content currently being presented at the display of such client device CD.

The user commands, i.e. the Pan-Tilt-Zoom (PTZ) commands and client status, i.e. spatial portion of said ultra high resolution video content currently transmitted towards said client device CD for current rendering are obtained by the portion selection means SSM and link relative commands sent by the client in content's reference coordinates, the content's reference coordinates being the location within a currently displayed frame of the ultra high resolution video content. The reference coordinate system of the ultra high resolution video content typically associates one pair of 2D (x, y) integer coordinates to each pixel of the ultra high resolution video content, we therefore have a byection between pixels of the content and pairs of integer coordinates in the reference coordinate system.

The computation of the coordinates from user interactions in the reference coordinate system does not need to be pixel-accurate; relative motion with a given speed will be translated into a new position in the content's reference coordinate system by the client portion selection means SSM with an error tolerance that can be parameterized, typically in case the estimated coordinates would lead to sub-pixel positions (that is non-integer coordinates in the reference coordinate system), a casting to the nearest pixel position (and hence integer coordinates) will be implemented.

The client device CD further comprises decoding means DM that is configured to decode the received selected spatial portion from said ultra high resolution video content, based on said selection information in view of at least part of said ultra high resolution video content being transmitted, (optionally from said server S) towards said client device CD in combination with content data pertaining to said ultra high resolution video content.

The client device CD further at least comprises a display and/or speakers for presenting the selected received selected spatial portion from said ultra high resolution video content and additionally available sound.

The client device CD additionally comprises means for selecting a spatial portion of the currently transmitted ultra high resolution video content. Such selection means may be a touch-screen, a mouse coupled to the client device, a gesture sensor or any other sensor for detecting Pan-Tilt-Zoom (PTZ) instructions of the user of the client device CD. Even audio or speech could be detected by a sensor and be translated into PTZ commands.

In order to explain the present invention first it is assumed that a user currently is watching a certain soccer game at a tablet or at the screen of an IPTV system. The corresponding ultra high resolution video content is being transmitted, by means of streaming, from the server S towards the client device CD. The user at a certain moment of time wishes to (zoom on and) track the ball by applying PTZ commands. The user generates these PTZ commands by means of touching the (touch-) screen of the tablet PC or by making gestures which are detected by dedicated gesture sensors like a camera on the tablet with the necessary gesture detection and recognition processing, or by means of the accelerometer sensor that could be present on the tablet, or audio/speech commands.

In case of watching such content on a television, kinect or Wii alike game pads could be applied for generating such PTZ commands.

In the prior art situation this selecting of spatial portions of the video for tracking an object such as the ball with the player touching the ball is although very much appreciated, not easy to perform. The user perceives the interactions for selecting the meant portion of the high resolution video content to be tedious and cumbersome after some time, due to the interaction delay or the sensitivity of the interactions in respect to the speed and trajectory of the desired (fast) moving object or person.

In the situation, of the present invention however the user again at a certain moment of time wishes to track the ball by applying PTZ commands. The user generates these PTZ commands by means of touching the (touch-) screen of the tablet PC or by making gestures which are detected by dedicated gesture sensors. Such PTZ command for selecting the spatial portion of the ultra high resolution video content including the ball and the player at the ball, or in other words PTZ commands for tracking the ball with the player in ball possession are transmitted by the spatial portion selection means SSM of the Client device CD towards the selection reception means SRM of the server S that receives the selection information from said client device CD to select a spatial portion of said ultra high resolution video content for transmitting said spatial portion towards said client device CD.

Subsequently, the selection means SPSM, selects a spatial portion from said ultra high resolution video content, based on said selection information, i.e. the PTZ command received, in view of at least part of said ultra high resolution video content being transmitted from said server S towards the client device CD in combination with content data pertaining to said ultra high resolution video content.

Hence, at first the selection means SPSM does interpret the i.e. the PTZ command received, i.e. the ball tracking command in view of the at least part of the ultra high resolution video content being transmitted from the server S towards the client device CD, which is the full - or a spatial portion of the ultra high resolution video content being transmitted from said server S towards the client device CD and presented at the screen of the client device CD. While taking into account the current view at the screen of the client device CD, the selection means SPSM applies the received PTZ command and applies the PTZ selection or tracking command at the full - or a spatial portion of the ultra high resolution video content being received and present at the screen of the client device. A spatial portion indicated by means of the PTZ selection command is initially selected by the selecting means. As the selected portion, i.e. the ball with the player being in possession of the ball is very fast moving, possibly the selection is not yet optimum performed, i.e. the selection does include a part of the moving ball however the meant player is not visible within the selected spatial portion.

In order to improve the tracking, additional content data pertaining to said ultra high resolution video content is taken into account to interpret the selection or tracking command.

The selection means SPSM additionally retrieves content data pertaining to the ultra high resolution video content via the content data reception means CDRM from a coupled video content data repository VCDR.

Such additional content data, that may include data such as region of interest data or saliency data, is data that is coupled to dedicated portions of the ultra high resolution video. For instance, in the current embodiment the content data contains regions of interest e.g. cover the ball of the soccer game, the referee, both goals at the playfield, a number of favorite soccer players, substitutes about to enter in the playfield, the coaches, interesting people in the stadium, the scoreboard, or even a portion of the content that is captured by additional broadcasting cameras, etc.

The saliency data included in the content data may comprise semantic information on the score-board, special events in the grandstand audience, special event on the playfield such as a wounded player or per-frame pixel-level saliency information such as the detection of grass, blue sky, face detection, motion detection, fireworks detection etc.

Such saliency data may be related to specific events within the video content that can be identified by production scripts where these production scripts contains set of rules to record important events (such as orchestration rules) that are specific to the content e.g. sports to tell the story of the game or other event such as a music concert, etc

Another possible content data is the availability of the portion of content being currently seen by another user who is a social buddy of the current user of the system, the user could then be interested in what his buddy is focusing on or tracking.

Still a further type of content data may be spatial audio capture, i.e. sound/speech detection in some parts of the stadium and link this position back to the content's reference coordinates of the content.

The selection means SPSM in the mean time or before has retrieved the content data pertaining to the ultra high resolution video content via the content data reception means CDRM from a coupled video content data repository VCDR.

In case the user of the client device with the PTZ-selection command selects a spatial portion of the video content that includes - or is near to a portion of the ultra high resolution video content that is associated with a region of interest, e.g. the region of interest including the ball together with the player being in possession of the ball, the selection means SPSM directs the selection of the spatial portion in such manner that the spatial portion includes the meant region of interest including the ball together with the player being in possession of the ball.

The selection means SPSM, in turn generates a spatial portion of the ultra high resolution video content that is retrieved from a coupled video repository VR by means of the video content reception means VCRM, in correspondence with the meant region of interest including the ball together with the player being in possession of the ball. Subsequently, the selection means SPSM outputs the spatial portion of the ultra high resolution video content, comprising the meant region of interest, where the meant region of interest includes the ball together with the player being in possession of the ball to the video transmission means VTM that subsequently forwards the spatial portion of the ultra high resolution video content towards an Encoding means EM for encoding the spatial portion of the ultra high resolution video content into a format suitable for display at the client device CD. In case of a tablet PC the encoded video format may be a broadcasting format such as H.264/AVC, H.265/HEVC, their scalable extensions, or VP8 or VP9 formats, or in case the client device CD is an IP connected television set may be a broadcasting format such as H.264/AVC, H.265/HEVC, or their scalable extensions, or VP8 or VP9 formats or any other suitable format.

It is to be noted that in an embodiment of the present invention the ultra high resolution video content may comprise 3-Dimensional video.

Finally the encoded spatial portion of the ultra high resolution video content including the ball together with the player being in possession of the ball is transmitted towards the client device decoding means DM that further hands over the portion of the ultra high resolution video content to means, of the client device, for display the portion of the ultra high resolution video content.

The user may change his view of the current selected spatial portion by making PTZ selection commands in case he/she intends to view another selection like another portion of the soccer game like the goal keeper and the way the goalkeeper reacts upon the player rushing into the goal in the same manner as described above.

It is to be noted that such Ultra high definition content typically consists of a high resolution video captured by one single camera. Alternatively, a composition may be generated by combining content captured by several cameras and stitched together which typically is referred to as a panorama. This may also be easily generalized to situations where the multiple cameras are not necessarily aligned in such a way that the panorama is a planar video. The content may in fact be the union of multiple videos from various cameras, this union does not need to be a connected surface but it may also be seen as the collection of piecewise linear video inputs, that may overlap each other. This type of union is often called a generalized panorama.

So called content's reference coordinates can be defined on such a generalized panorama in a similar way they are defined for a single camera captured video.

Each pixel of the generalized panorama receives an index and reference 2D coordinates possibly with the index of the camera the pixel relates to, which enables to solve situations of overlap or of disconnected portions of the generalized panorama.

The navigation through such generalized panorama may be based on reference coordinates in a similar manner as previously described for 2D ultra high resolution video content.

Further, it is to be noted that although the embodiment describes a client-server architecture wherein the present invention is implemented and executed, this also could have been implemented and executed in a peer-to-peer architecture, cloud architecture, hardware architecture, and each other form in between.

In an additional embodiment, the Video repository VR, the analysis means AM and the video content data repository VCDR may be included in the same server S.

In a further embodiment of the present invention a plurality of servers could be coupled to, and being served by, respectively a single Video repository VR, a single analysis means AM and/or a single video content data repository VCDR.

In still another embodiment of the present invention the video content data repository VCDR and/or the video repository could be implemented in the cloud or a content delivery network so that all video data and/or video content data VR data respectively may be cached in the cloud or cached in a Content delivery network.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for selecting a spatial portion of ultra high resolution video content under control of a client device (CD) resolution for being transmitted from a server (S) towards said client device (CD), said method comprising the steps of:
- obtaining selection information from said client device (CD) to select a spatial portion of said ultra high resolution video content for transmitting towards said client device (CD); and
- selecting said spatial portion from said ultra high resolution video content, based on said selection information in view of at least part of said ultra high resolution video content being transmitted from said server (S) towards said client device (CD) in combination with video content data pertaining to said ultra high resolution video content.

2. A method according to claim 1, wherein said selection information comprises a Pan-Tilt- Zoom command.

3. A method according to claim 1, wherein said selection information comprises a command based on content's reference coordinates.

4. A method according to claim 1, wherein said content data contains at least one of region of interest information and saliency information that is coupled to dedicated portions of the ultra high resolution content

5. A System configured to, under control of a client device (CD), select a spatial portion of ultra high resolution video content for being transmitted from a server (S) towards a client device (CD), said client device (CD) being coupled to said server (S), said system comprising:
- a reception means configured to obtain selection information from said client device (CD) to select a spatial portion of said ultra high resolution video content for transmitting said spatial portion towards said client device (CD); and
- a selection means, configured to select said spatial portion from said ultra high resolution video content, based on said selection information in view of at least part of said ultra high resolution video content being transmitted from said server (S) towards said client device (CD) in combination with video content data pertaining to said ultra high resolution video content.

6. A system according to claim 5, wherein said selection information comprises a Pan-Tilt- Zoom command.

7. A system according to claim 5, wherein said selection information comprises a command based on content's reference coordinates.

8. A system according to claim 5, wherein said content data contains at least one of region of interest information and saliency information that is coupled to dedicated portions of the ultra high resolution content.

9. Device (SD) for use in a system according to claim 4, said device being configured to select a spatial portion of ultra high resolution video content under control of a client device (CD), at least part of said ultra high resolution video content being transmitted from a server (S) towards said client device (CD), said device comprising:
- a selection information reception means (SRM), configured to obtain selection information, from said client device (CD), to select a spatial portion of said ultra high resolution video content for transmitting towards said client device (CD); and
- a video content reception means (VCRM), configured to obtain said ultra high resolution video content; and
- a content data reception means (CDRM), configured to obtain said video content data pertaining to said ultra high resolution video content; and
- a selection means (SPSM), configured to select said spatial portion from said ultra high resolution video content, based on said selection information in view of at least part of said ultra high resolution video content being transmitted from said server (S) towards said client device (CD) in combination with video content data pertaining to said ultra high resolution video content.

10. Device (SD) according to claim 7, wherein said device (SD) further comprises:
- an encoding means, configured to encode said spatial portion from said ultra high resolution video content selected.

11. Server for use in a system according to claim 4, wherein said server (S) comprises a device (SD) according to claim 6.

12. Network element for use in a system according to claim 4, wherein said server (S) comprises a device (SD) according to claim 6.

13. Computer program product comprising software adapted to perform the method steps in according to any of claim 1-5 when executed on a data processing apparatus.
